# EUROPEAN PATENT APPLICATION

(11) **EP 1 275 550 A1**
(43) Date of publication of application: **15.01.2003**
(21) Application number: 01116572.7
(22) Date of filing: 09.07.2001
(51) Int. Cl.: B60K 35/00, B60Q 1/38

(54) **Turn indicator display for vehicles**

(71) Applicant: Watanabe, Fumio, Isezaki-shi, Gunma 372-0000 (JP)
(72) Inventor: Watanabe, Fumio, Isezaki-shi, Gunma 372-0000 (JP); Watanabe, Yumiko, Isezaki-shi, Gunma 372-0000 (JP)
(74) Representative: Kern, Wolfgang, Dipl.-Ing.

(57) **Abstract**

An indicator lamp and a sound generator indicating to a driver that turn signals are on, are mounted on an instrument panel of a dashboard. However, the indicator lamp may enter the driver's blind spot depending on the height adjustment of a steering wheel and a turn indication sound may be absorbed by the sounds of a radio or the like. Therefore, it is aimed to prevent a possible danger of a vehicle running with the turn signals on. The present invention is characterized by having an indicator lamp indicating the on-state of turn signals, mounted at an appropriate position of the steering wheel. It is configured so that the driver can visually check with reliability that the turn signals are on.

## Description

### BACKGROUND OF THE INVENTION

### 1. Field of the Invention

The present invention relates to an automobile having remarkably safe drivability capable of surely indicating to a driver that turn signals are on.

### 2. Description of the Related Art

The automobile is generally provided with turn signals for indicating its right or left turn to oncoming cars and/or following cars. A switch lever for the turn signals is mounted near a steering wheel and manually operated in a turning direction by the driver when the automobile makes a right or a left turn. The switch lever operated as above is designed to automatically return to an initial position when the steering wheel is returned to the neutral position upon the completion of the turn.

When the switch lever is operated in a turning direction and the steering wheel is turned in the same direction and then returned to the original position, the switch lever may not return to the initial position depending on a returned angle of the steering wheel. In other words, the automobile keeps running with the turn signals still on, possibly causing an accident with an oncoming car or a following car.

At least one indicator lamp and a sound generator, which alert a driver to the on-state of the turn signals, are mounted on the instrument panel of a dashboard. Therefore, the driver learns from the blinking indicator lamp and the sounding sound generator that the switch lever has not returned to the initial position and so he manually returns the switch lever to the initial position.

Because the turn signal indicator lamp mounted on the instrument panel of the dashboard is located to be visible through the circle of the steering wheel, it may enter the driver's blind spot when the driver tilts the steering wheel to the driver's desired height. And, the sound of the turn signal sound generator may be absorbed by the sounds of a radio or sound reproduction equipment and may not reach the driver. As a result, there is a problem that a dangerous situation of running the automobile with the turn signals blinking could not be prevented from occurring.

### SUMMARY OF THE INVENTION

The present invention is achieved to remedy the above drawbacks. An object of the present invention is to provide an automobile having remarkably safe drivability that a driver can surely check the on-state of turn signals.

To achieve the above object, the automobile according to the present invention is characterized by having an indicator lamp, which indicates the on-state of the turn signals, mounted on appropriate positions of a steering wheel and it is configured as an indicator lamp on an instrument panel does not enter the driver's blind spot.

In the automobile configured as described above according to the present invention, the indicator lamp on a steering wheel is always in the driver's view. Therefore, when a switch lever does not return to the initial position even after the steering wheel is returned to the neutral position due to the left or right small turning angle of the vehicle, the driver can immediately learn that the turn signals are continuously on and that can prevent the automobile from running with the turn signals on. Thus, an advantageous effect is provided to prevent an accident with an oncoming car or a following car due to the turn signals remaining on.

The automobile according to the present invention is characterized by having a pair of indicator lamps symmetrically mounted so that the top part of the steering comes between the lamps. It is configured to specify a direction that the switch lever is returned when it does not return to the initial position even if the steering wheel is returned to the neutral position upon completion of a right or a left turn.

In this case, when the steering wheel is returned to the neutral position upon completion of a right or a left turn, it becomes apparent that which turn signals are still on from the blinking indicator lamp on the top part of the steering wheel. Accordingly, the invention provides an advantageous effect that the driver can immediately leam a returning direction of the switch lever.

The automobile according to the present invention is also characterized by having, for example, at least one indicator lamp indicating the on-state of turn signals, mounted at an appropriate position which is outside the periphery of the steering wheel but is in the driver's view, in the automobile cabin. It is configured not to have the position of the lamp on the instrument panel in the driver's blind spot.

In this case, the indicator lamp on the steering wheel is always in the driver's view. Even if the switch lever does not return to the initial position when the steering wheel is returned to the neutral position on completion of the turn due to the right or left small turning angle of the vehicle, the driver can immediately learn that the turn signals are still on. Therefore, it is possible to prevent the vehicle from running with the turn signals on without fail. Thus, the present invention provides a remarkable effect to prevent an accident with an oncoming vehicle or a following car due to the turn signals kept on.

In addition, the automobile according to the present invention is characterized by having, for example, a pair of indicator lamps symmetrically mounted on a dashboard with the steering wheel positioned between the lamps. It is configured to specify a returning direction of the switch lever which does not return to the initial position even if the steering wheel is returned to the neutral position upon completion of a right or a left turn.

In such a case, when the steering wheel is returned to the neutral position upon completion of a right or a left turn, it becomes apparent which turn signals are still on from the blinking indicator lamp on the dashboard. Accordingly, the invention provides an advantageous effect that the driver can immediately learn a returning direction of the switch lever.

In addition, the automobile according to the present invention is characterized by having at least one indicator lamp, which indicates that turn signals are on, mounted at an appropriate position which is outside the periphery of the steering wheel but is in the driver's view, in the automobile cabin. It is configured not to have the position of the indicator lamp on the instrument panel in the driver's blind spot.

In this case, the indicator lamp on the steering wheel is always in the driver's view so that the driver can immediately know that the turn signals are still on, even if the switch lever does not return to the initial position when the steering wheel is returned to the neutral position because of a right or a left small turning angle of the vehicle. Therefore, it is possible to prevent the vehicle from running with the turn signals on without fail. Thus, the present invention provides a remarkable effect to prevent an accident with an oncoming vehicle or a following vehicle due to the turn signals kept on.

The automobile according to the present invention is further characterized by having, for example, at least one indicator lamp, which indicates that the turn signals are on, mounted at an appropriate position outside the automobile cabin which is visible from the driver. It is configured to specify a returning direction of the switch lever which does not return to the initial position even if the steering wheel is returned to the neutral position upon completion of a right or a left turn.

In such a case, since the operation of the turn signals is always indicated in the driver's view, the driver can immediately learn that the turn signals are still on even if the switch lever does not return to the initial position when the steering wheel is returned to the neutral position due to a right or a left small turning angle of the vehicle. This makes it possible to prevent the vehicle from running with the turn signals on without fail. Thus, the present invention provides a remarkable effect to prevent an accident with an oncoming vehicle or a following vehicle due to the turn signals kept on.

The automobile according to the present invention is also characterized by having, for example, a pair of indicator lamps symmetrically mounted on a hood. It is configured to specify a returning direction of the switch lever which does not return to the initial position even if the steering wheel is returned to the neutral position upon completion of a right or a left turn.

In such a case, when the steering wheel is returned to the neutral position upon completion of a right or a left turn, it becomes apparent which turn signals are still on from the blinking indicator lamp on the hood. Accordingly, the present invention provides a remarkable effect that the driver can immediately learn a returning direction of the switch lever.

### BRIEF DESCRIPTION OF THE DRAWINGS

In the accompanying drawings:
Fig. 1 is a front view showing a steering wheel and a dashboard section of the first embodiment of an automobile according to the present invention;
Fig. 2 is an explanatory diagram showing that indicator lamps are symmetrically mounted on a steering wheel with the top part of the steering wheel between the indicator lamps;
Fig. 3 is an enlarged sectional view taken along line II-II of Fig. 2;
Fig. 4 is an explanatory diagram showing a relation between a driver's view and the indicator lamps; and
Fig. 5 is an explanatory diagram showing another embodiment of an automobile according to the present invention.

### DESCRIPTION OF THE PREFERRED EMBODIMENTS

Hereinafter, preferred embodiments of the present invention will be described with reference to the accompanying drawings.

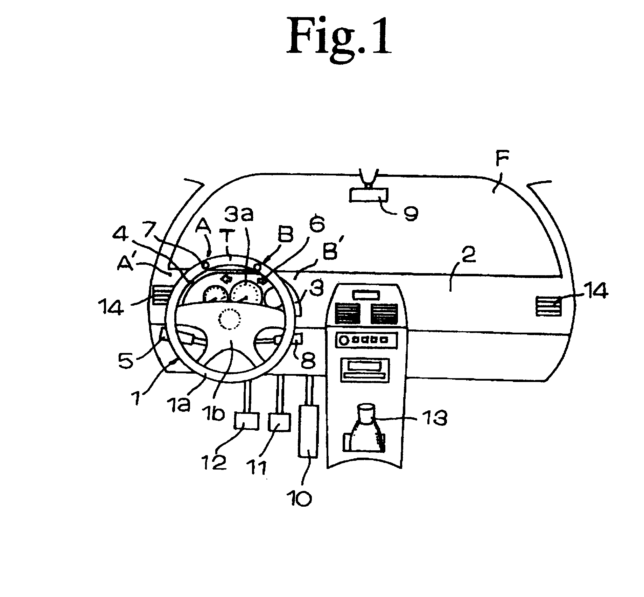

Fig. 1 shows a front view showing a steering wheel and a dashboard section of the first embodiment of an automobile according to the present invention. In Fig. 1, reference numeral 1 refers to a steering wheel. The steering wheel 1 comprises a wheel section 1a and a base section 1b supporting the wheel section 1a. The base section 1b is connected to a steering column (not shown). In the figure, the steering wheel 1 is mounted on the left side of a dashboard 2, indicating an automobile with a left-hand steering wheel, but it does not mean that an automobile with a right-hand steering wheel is excluded.

Reference numeral 3 refers to an instrument panel mounted on the dashboard 2. The instrument panel 3 includes various types of meters 3a such as a speedometer. Among these meters 3a, main meters (such as the speedometer) necessary for safe driving are generally positioned so that the driver can naturally see them through a space 4 formed between the wheel section 1a and the base section 1b of the steering wheel 1. The driver performs a series of information processing such as acknowledgment of various types of information, judgment and operation to visually capture the states of following vehicles in the travelling direction.

Reference numeral 5 refers to a switch lever for turn signals (turn signal lights disposed on the right and left side of front and tail of the vehicle to suggest to the drivers of oncoming cars and/or following cars that the vehicle is to make a turn). The switch lever 5 is manually operated in a turning direction by the driver and is designed to automatically return to the initial position when the steering wheel I is returned to the neutral position after completion of a right or a left turn. The switch lever 5 also serves as a switch to turn on and off the head lights when it is twisted.

Reference numeral 6 indicates indicator lamps mounted on the instrument panel 3 and blinking to suggest to the driver that the turn signals are on. The indicator lamp 6 is equipped with a sound generator (not shown) which intermittently makes a sound in association with the blinking intervals of the indicator lamp 6. Therefore, when the switch lever 5 does not return automatically to the initial position according to a turning angle of the steering wheel, the driver is visually and audibly informed by the indicator lamp that the turn signals are continuously on.

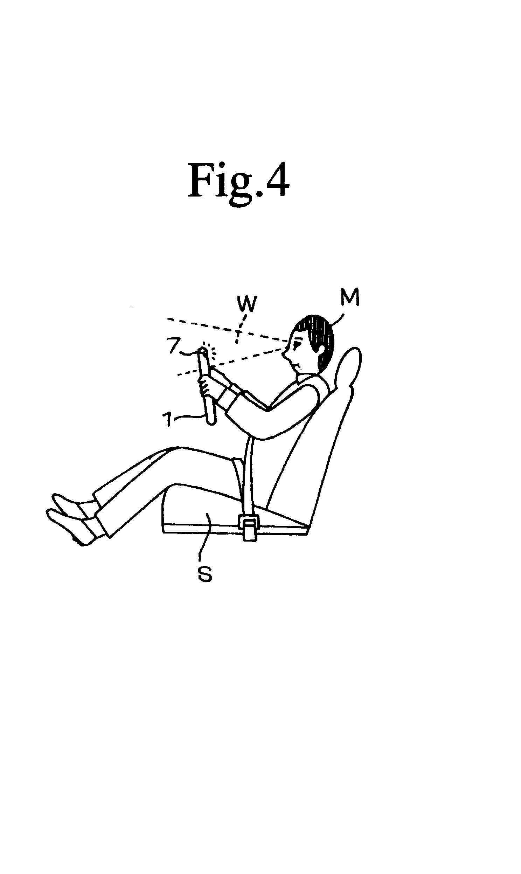

Reference numeral 7 indicates indicator lamps mounted on the steering wheel 1 to indicate to the driver that the turn signals are on. The indicator lamps 7 are mounted on the steering wheel 1 gripped by a driver M in a driver's seat S so as to be surely in view W (indicated by broken lines) of the driver M as shown in Fig. 4. Thus, the indicator lamps 7 are not hidden by the steering wheel regardless of a seated height of the driver or a height of the steering wheel (adjustable one is available) like the indicator lamps 6 mounted on the instrument panel 3. It is to be understood that the indicator lamps 7 on the steering wheel 1 may be mounted on the instrument panel 3 instead of the indicator lamps 6 (without the indicator lamps 6 on the instrument panel 3) or in association with the indicator lamps 6 on the instrument panel 3.

The indicator lamps 7 in pair on the steering wheel 1 are mounted at symmetric positions A, B so that the top part T of the steering wheel 1 comes between them. It is to be understood that the positions of the indicator lamps 7 are not limited to the aforesaid positions. Namely, the indicator lamps 7 may be mounted on the base section 1b other than the wheel section 1a. The number of indicator lamps 7 is not limited to two but may be one or more than two. Preferably, the indicator lamps 7 shall not be mounted at the top of the steering wheel where the driver grips when driving by one hand or both side portions of the steering wheel where the driver grips by both hands. A vibration generator (not shown) which generates vibrations in association with the turn signals may be embedded in the aforesaid top and side of the steering wheel where the indicator lamp 7 is suggested not to be mounted. Thus, it is possible to suggest to the driver through the vibrations in his or her palm that the turn signals are on.

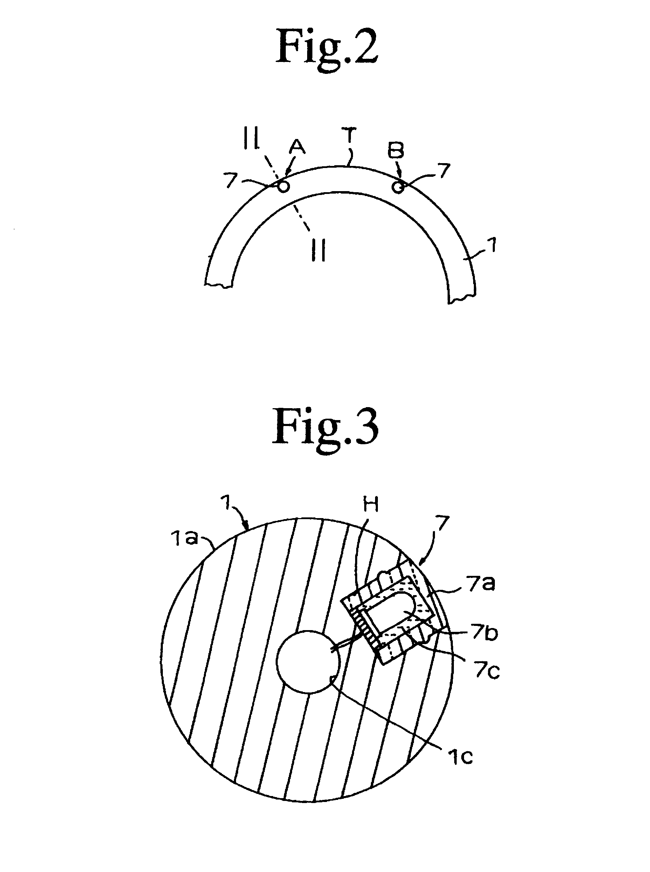

Each indicator lamp 7 is embedded in the steering wheel 1 as shown in Fig. 3. A lamp (LED) 7b is placed in a case 7a made of a transparent material such as acrylic resin, a transparent substance (such as molten acrylic resin) 7c is charged in the case 7a to stabilize the position of the lamp 7b, and the case 7a is put in a hole H drilled in the steering wheel 1. The lamp 7b is connected to a power circuit (not shown) for the turn signals through a cavity 1c when the steering wheel 1 is hollow, or through a groove or a cavity (not shown) specially formed when the steering wheel 1 is not hollow.

The indicator lamp 7 is not limited to have the embedded structure but may have a form (not shown) so to be attached (including fixture by winding) to the wheel section 1a of the steering wheel 1 or a form (not shown) so to be adhered to the base section 1b of the steering wheel 1. In such a case, its outer shape may be formed to resemble television cartoon and other popular characters, animals, plants, or other forms.

The indicator lamp 7 may be mounted at an appropriate position (not shown) outside of the circle of the steering wheel 1 in the cabin viewed from the driver, for example mounted in one on the dashboard 2 in the immediate vicinity of windshield F over the steering wheel 1 viewed from the driver or in a pair at symmetric positions A', B' on the dashboard 2 with the steering wheel 1 between A' and B'. It is needless to say that the position of the indicator lamp is not limited to the dashboard 2 and the indicator lamp may be formed to have a shape (not shown) to be absorbed to the windshield F by means of a suction cup. It may also be formed to resemble television cartoon and other popular characters, animals, plants or other forms.

The indicator lamp 7 is not limited to be mounted in the automobile cabin but may be mounted in one on the hood or in a pair at symmetric positions of the hood as far as it is visible from the driver.

The indicator lamp 7 shown in Figs. 2,3 is illustrated as a spot of light source such as a midget lamp or LED, however, its size is arbitrary and the larger is the better as possible. For instance, it may be formed to have a linear shape as it runs almost the entire length of the right or the left side of the upper half of the steering wheel (i.e., the lamp being elongated along the curve of wheel section 1a and thus curvilinear).

In addition, in place of the spot of light source, the indicator lamp 7 may be a lamp with strength or color of light, which can capture a driver's attention.

In Fig. 1, reference number 8 refers to a switch lever for operation of windshield wipers, number 9 a rear-view mirror, number 10 an accelerator pedal, number 11 a brake pedal, number 12 a clutch pedal, number 13 a gearshift lever, and number 14 air conditioner registers.

Next, operations of the automobile indicated in the first embodiment will be described below.

When the driver makes a right or a left turn, the switch lever 5 for the turn signals is manually operated in a turning direction to indicate to oncoming cars and/or following cars that it is to make a turn. In such a case, left or right turn signals on the front and tail side of the car operate (blink) and at the same time the operation of the turn signals is securely informed to the driver M driving the vehicle by operating one of the indicator lamps 7 mounted on the steering wheel 1.

And, the operation of the turn signals and the operations of the indicator lamp 6 mounted on the instrument panel 3 and the indicator lamp 7 mounted on the steering wheel 1 terminates upon the completion of the right or left turn and the steering wheel is returned to the neutral position with the switch lever 5 automatically returned to the initial position.

However, when the vehicle makes a right or a left turn at a small angle, the switch lever 5 does not return to the initial position after the steering wheel is returned to the neutral position upon the completion of the turn and the turn signals remain on. In the automobile of the present invention, the driver M learns from the indicator lamps 7 on the steering wheel 1 within the driver's view that the turn signals are continuously on. Thus, the driver is readily and surely informed that the vehicle is running with the turn signals on. Therefore, the driver can immediately return the switch lever 5 to the initial position by a manual operation.

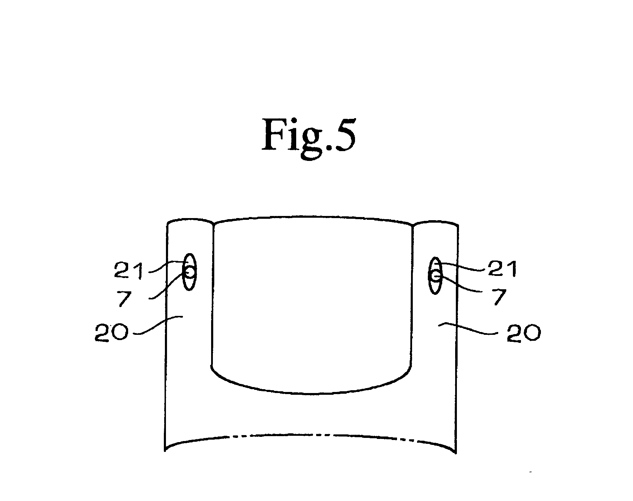

Fig. 5 shows an explanatory diagram showing another embodiment of an automobile according to the present invention. Fig. 5 only shows a hood and a fender of an automobile.

This embodiment is of an automobile that has the indicator lamps 7 mounted on fender lamps 21 attached to fenders 20.

In the embodiment, the driver only needs to see his or her front view in order to directly see the indicator lamps 7 blinking, since the indicator lamps 7 are mounted on the fender lamps 21. This way, the driver is able to drive comfortably without changing his or her view. As a result of this, the driver can immediately check when the turn signals are still at their on-state even though the car has completed a turn.

Note that the fender lamp may be attached anywhere on the fender, and its position is not limited to the position in Fig. 5.

Also, the indicator lamps 7 may also be directly attached to the fender.

The invention is not limited to the above embodiments and various modifications may be made without departing from the spirit and the scope of the invention. Any improvement may be made in part or all of the components.

## Claims

1. An automobile comprising a steering wheel having a wheel section and a base section supporting the wheel section, and at least one indicator lamp mounted at an appropriate position of the wheel section of the steering wheel to indicate the on-state of turn signals of the automobile.

2. An automobile according to claim 1, wherein said indicator lamp is constituted by a pair of said indicator lamps which are symmetrically mounted so that the top part of the wheel section of said steering wheel extends between the indicator lamps.

3. An automobile according to claim 1, wherein a pair of said indicator lamps are formed to have a curvilinear shape as they respectively run almost the entire length of each side of the upper half of said steering wheel.

4. An automobile comprising a steering wheel and at least one indicator lamp indicating the on-state of turn signals, mounted at an appropriate position which is outside the periphery of the steering wheel but is in a driver's view in the automobile cabin.

5. An automobile according to claim 4, wherein the steering wheel is circular and said indicator lamp is constituted by a pair of said indicator lamps which are symmetrically mounted on a dashboard outside the circle of said steering wheel with said steering wheel positioned between said lamps.

6. An automobile comprising at least one indicator lamp indicating the on-state of turn signals mounted at an appropriate position outside the automobile cabin, which indicator lamp is visible from a driver of the automobile.

7. An automobile according to claim 6, wherein a pair of said indicator lamps is symmetrically mounted on a hood of the automobile.

8. An automobile according to claim 6, wherein a pair of said indicator lamps are symmetrically mounted on fenders of the automobile.

9. An automobile according to claim 8, wherein said pair of indicator lamps is attached to a pair of fender marker lamps mounted symmetrically on said fenders of the automobile.

10. An automobile comprising a steering wheel including a wheel section and a base section supporting the wheel section, and a pair of turn signal indicator lamps mounted at appropriate positions in an upper half of the wheel section to indicate the on-state of turn signals of the automobile.

11. An automobile according to claim 10, wherein said indicator lamps are symmetrically mounted so that a top part of the upper half of the wheel section extends between the indicator lamps.

12. An automobile according to claim 11, wherein said indicator lamps are each constituted by a midget lamp or LED embedded within the wheel section of said steering wheel.
